# EUROPÄISCHE PATENTSCHRIFT

(11) **EP 3 115 294 B1**
(45) Veröffentlichungstag und Bekanntmachung des Hinweises auf die Patenterteilung: **18.04.2018**
(21) Anmeldenummer: 16178333.7
(22) Anmeldetag: 07.07.2016
(51) Int. Cl.: B64C 13/30, F16B 7/06, F16B 39/32

(54) **ZUG-DRUCK-STANGE**
PUSH-PULL ROD
PINCE DE TRACTION-COMPRESSION

(30) Priorität: 10.07.2015 DE 202015103632 U
(43) Veröffentlichungstag der Anmeldung: 11.01.2017
(73) Patentinhaber: Fellinger, Josef, 4872 Neukirchen an der Vöckla (AT); Haller, Matthias, 4872 Neukirchen a. d. Vöckla (AT)
(72) Erfinder: Fellinger, Josef, 4872 Neukirchen an der Vöckla (AT); Haller, Matthias, 4872 Neukirchen a. d. Vöckla (AT)
(74) Vertreter: Lösch, Christoph Ludwig Klaus

(56) Entgegenhaltungen:
- EP-A1- 2 320 100
- DE-C1- 19 827 406
- DE-U1-202004 016 321
- DE-U1-202010 013 181
- DE-U1-202011 051 135
- FR-A- 380 501
- JP-A- 2001 065 521

## Beschreibung

Die Erfindung betrifft eine Zug-Druck-Stange. Zug-Druck-Stangen (siehe z.B. EP 2 320 100 A1), die beispielsweise im Flugzeugbau eingesetzt werden, weisen im Allgemeinen einen im Wesentlichen rohrförmigen Körper auf, an dessen Enden sich jeweils eine Befestigungsvorrichtung zur Montage der Zug-Druck-Stange an Montagepunkten befindet. Die Länge der Zug-Druck-Stange ist hierbei beispielsweise über eine oder mehrere Gewindeanordnungen verstellbar, um eine Anpassung an einen vorgegebenen Abstand zwischen den Montagepunkten vornehmen zu können.
Der Erfindung liegt die Aufgabe zugrunde, eine einfach handhabbare, insbesondere eine montagefreundliche und platzsparend ausgebildete, Zug-Druck-Stange anzubieten, bei der eine unbeabsichtigte Längenänderung in deren eingebauten Zustand zuverlässig verhindert wird.
Diese Aufgabe wird durch die Merkmale des Schutzanspruchs 1 gelöst. Vorteilhafte Ausführungsformen sind in den Unteransprüchen beschrieben.
Erfindungsgemäß weist die Zug-Druck-Stange zumindest eine Befestigungsvorrichtung mit einem Kupplungselement und einem daran angeordneten Schaft, zumindest ein hülsenförmiges Anschlussstück, wobei die Befestigungsvorrichtung zur Längenveränderung der Zug-Druck-Stange über eine Gewindeanordnung drehbar mit dem Anschlussstück verbunden ist, und eine Rastvorrichtung mit in radialer Richtung gesehen jeweils einander zugewendeten sowie zusammenwirkenden ersten und zweiten Rastelementen, die die Drehbewegung der Befestigungsvorrichtung relativ zum Anschlussstück in einer Mehrzahl von Drehstellungen mit einer vorbestimmten Verriegelungskraft lösbar arretieren. Das erste Rastelement ist auf einer innenliegenden Mantelfläche eines Ringelements ausgebildet. Das Ringelement ist in axialer Richtung verschiebbar und in Umfangsrichtung drehfest mit dem Anschlussstück verbunden. Das zweite Rastelement ist drehfest am Schaft der Befestigungsvorrichtung angeordnet.

In einer derartigen Zug-Druck-Stange verhindern die Rastelemente eine unbeabsichtigte Längenverstellung im eingebauten Zustand. Zugleich ist eine Längenverstellung möglich, wenn die zur Verdrehung der Rastelemente benötigte Kraft aufgebracht wird. Die verschiebbare Lagerung des Ringelements relativ zur Axialrichtung ermöglicht es, dass die Rastelemente unabhängig von der momentan eingestellten Länge der Zug-Druck-Stange immer im gegenseitigen Eingriff bleiben und damit für eine zuverlässige Verdrehsicherung sorgen.

In einer vorteilhaften Ausführungsform weist das Ringelement auf dessen äußeren Mantelfläche Fortsätze auf, die sich in axialer Richtung erstrecken und das Anschlussstück weist axial verlaufende Schlitze oder Nute auf, in die die Fortsätze des Ringelements in axialer Richtung verschiebbar gelagert sind. Auf diese Weise kann ein besonders sichere drehfeste Lagerung und zugleich eine axiale Verschiebbarkeit des ersten Rastelements erreicht werden.

In einer weiteren vorteilhaften Ausführungsform ist das erste Rastelement als Rastzähne ausgebildet, die vollumfänglich auf der innenliegenden Mantelfläche des Ringelements angeordnet sind.

In einer weiteren vorteilhaften Ausführungsform ist das zweite Rastelement auf einer äußeren Mantelfläche eines Hülsenelements ausgebildet. In besonders vorteilhafter Weise ist das Hülsenelement ferner innenliegend im Ringelement angeordnet und an einer Stirnseite des Schafts fixiert. Auf diese Weise ist eine platzsparende drehfeste Lagerung des zweiten Rastelements möglich.

In einer bevorzugten Ausführungsform ist das zweite Rastelement auf einem elastischen Fortsatz des Hülsenelements ausgebildet. Durch die Elastizität des Fortsatzes kann das zweite Rastelement durch Aufbringung einer bestimmten Kraft aus dem ersten Rastelement herausgedrückt werden. Es ist somit durch Aufbringen einer vorbestimmten Kraft eine Längenveränderung im eingebauten Zustand möglich.

In einer bevorzugten Ausführungsform besteht das zweite Rastelement aus genau zwei Rastnasen. In besonders bevorzugter Weise sind die beiden Rastnasen konzentrisch gegenüberliegend zueinander ausgebildet.

Des Weiteren kann ein Sicherungsring als mechanische Ausdrehsicherung am Schaft angebracht sein. Auf diese Weise kann ein zu weites Herausdrehen der Befestigungsvorrichtung verhindert werden.

Weist die Zug-Druck-Stange an beiden axialen Enden eines Mittelteils jeweils eine Befestigungsvorrichtung auf, so ist in bevorzugter Weise eine Befestigungsvorrichtung über ein Rechtsgewinde mit dem Mittelteil verbunden und die weitere Befestigungsvorrichtung ist über ein Linksgewinde mit dem Mittelteil verbunden. Dadurch ist die Länge der Zug-Druck-Stange auch im eingebauten Zustand durch Verdrehen des Mittelteils möglich.

Die Erfindung ist anhand eines Ausführungsbeispiels in den Zeichnungsfiguren weiter erläutert, wobei gleiche Bezugszeichen gleiche bzw. gleichwirkende Komponenten bezeichnen. Es zeigen:
- Fig. 1: eine perspektivische Ansicht einer Zug-Druck-Stange;
- Fig. 2: ein Axialschnitt der Zug-Druck-Stange aus Fig. 1 entlang der Mittelachse der Zug-Druck-Stange;
- Fig. 3: eine perspektivische Explosionsdarstellung einer Befestigungsvorrichtung aus Fig. 1; und
- Fig. 4: eine Schnittdarstellung entlang der Linie A2 - A2 in Fig. 2.

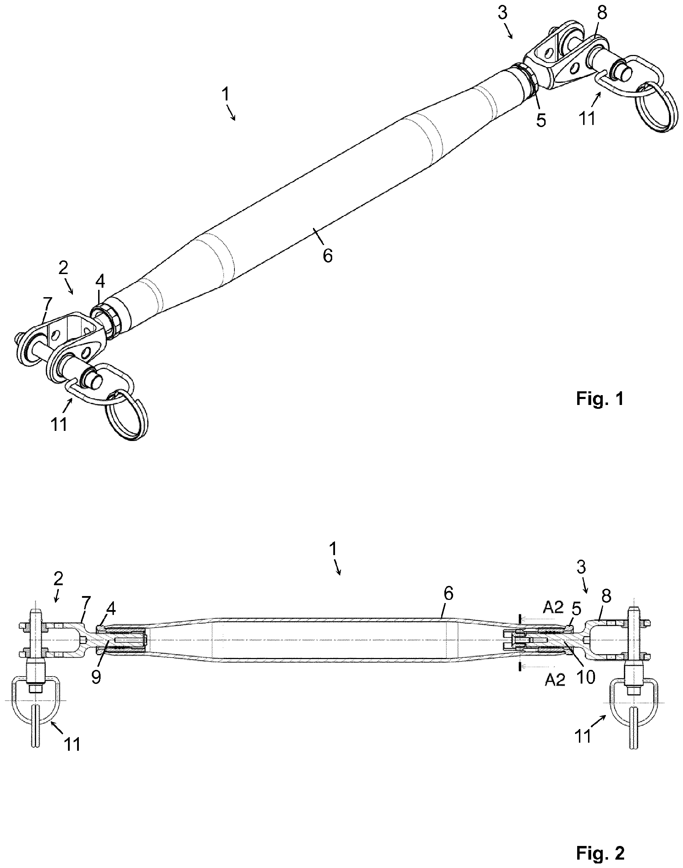

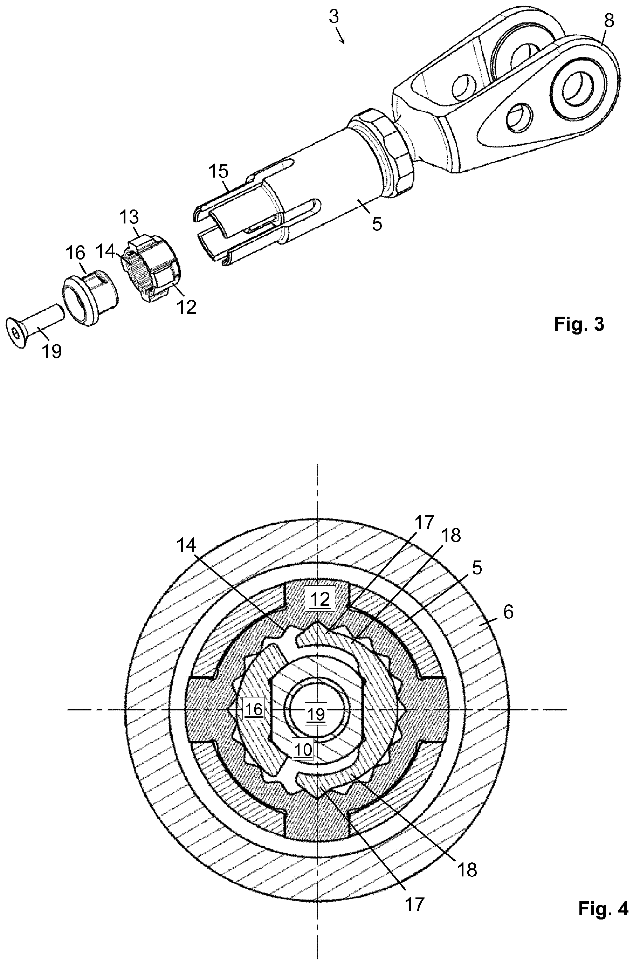

In den Fig. 1 bis 4 ist eine Ausführungsform einer Zug-Druck-Stange 1 gezeigt. Die Zug-Druck-Stange 1 weist eine erste Befestigungsvorrichtung 2 und eine zweite Befestigungsvorrichtung 3 auf. Die erste Befestigungsvorrichtung 2 ist mit einem ersten Anschlussstück 4 längenveränderlich verbunden. Auch die zweite Befestigungsvorrichtung 3 ist längenveränderlich mit dem zweiten Anschlussstück 5 verbunden. Zwischen den Anschlussstücken 4, 5 ist ein rohrförmiges Mittelstück 6 angebracht. Die Befestigungsvorrichtung 2 besteht im Wesentlichen aus einem Kupplungselement 7 und einem Schaft 9, der sich durch das hülsenförmige Anschlussstück 4 erstreckt. Die Befestigungsvorrichtung 3 besteht in ähnlicher Weise aus einem Kupplungselement 8 und einem Schaft 10, der sich ebenfalls durch das ebenfalls hülsenförmige Anschlussstück 5 erstreckt.

Die Kupplungselemente 7, 8 dienen der Fixierung der Zug-Druck-Stange 1 an den jeweiligen Montagepunkten der die Zug-Druck-Stange 1 umgebenden Konstruktion.

Die eigentliche Verbindung zwischen der Zug-Druck-Stange und den Montagepunkten erfolgt hierbei durch die Kupplungselemente 7, 8. Im vorliegenden Fall sind die Kupplungselemente 7, 8 als Gabelköpfe ausgebildet. Diese weisen jeweils eine nicht näher bezeichnete Öse auf, in die ein Verbindungsbolzen 11 eingebracht werden kann. Durch das Einbringen des Verbindungsbolzens 11 erfolgt eine Fixierung des Kupplungselements 7, 8 an dem jeweiligen Montagepunkte der die Zug-Druck-Stange 1 umgebenden Konstruktion.

Zum Ausgleich einer Lagedifferenz kann die Länge der Zug-Druck-Stange 1, d.h. der Abstand zwischen den Kupplungselementen 7, 8 zueinander, variierte werden. Dazu sind der Schaft 9 bzw. 10 jeweils mit einem außenliegenden Gewinde und das Anschlussstück 4 bzw. 5 mit einem korrespondierenden Innengewinde versehen, sodass durch Herein- bzw. Herausschrauben der Befestigungsvorrichtung 2 und/oder 3 die Länge der Zug-Druck-Stange 1 variiert werden kann. Das jeweilige Außengewinde des Schaftes 9 bzw. 10 und das korrespondieren Innengewinde des Anschlussstückes 4 bzw. 5 bilden damit eine jeweils Gewindeanordnung. Dabei ist die Gewindeanordnung auf Seite der ersten Befestigungsvorrichtung 2 als Linksgewinde und die Gewindeanordnung auf Seite der zweiten Befestigungsvorrichtung 3 als Rechtsgewinde ausgeführt.

Das Anschlussstück 5 ist im Wesentlichen hülsenförmig ausgestaltet und besitzt auf der dem Kupplungselement 8 abgewandten Seite der Mantelfläche Schlitze 15, die sich in axiale Richtung erstrecken. In diesen Schlitzen 15 ist ein Ringelement 12 in axialer Richtung verschiebbar und in Umfangsrichtung drehfest gelagert. Genauer weist das Ringelement 12 auf dessen äußeren Mantelfläche axial verlaufende Fortsätze 13 auf, deren Größe auf die Größe der Schlitze 15 angepasst ist, sodass eine axiale Verschiebung innerhalb der Schlitze 15 ermöglicht ist. Zugleich wird eine Drehbewegung des Ringelements 12 relativ zum Anschlussstück 5 durch die Fortsätze 13 blockiert.

Auf der innenliegenden Mantelfläche des Ringelements 12 ist ein erstes Rastelement 14 ausgebildet. Genauer stellt das erste Rastelement 14 Rastzähne dar, die vollumfänglich auf der innenliegenden Mantelfläche des Ringelements 12 ausgebildet sind.

Im Inneren des Ringelements 12 ist ein Hülsenelement 16 positioniert. Das Hülsenelement 16 weist auf dessen außenliegenden Mantelfläche ein zweites Rastelement 17 auf. Genauer besitzt das Hülsenelement 16 insgesamt zwei elastische Fortsätze 18, auf denen jeweils eine Rastnase ausgebildet ist. Die beiden Rastnasen bilden zusammen das zweite Rastelement. Das Hülsenelement 16 ist mit einer Schraube 19 drehfest an der Stirnseite des Schafts 10 fixiert.

Das erste Rastelement 14 und das zweite Rastelement 17 sind hierbei derart angeordnet, dass sie einander zugewandt sind und zusammenwirken können. Die Rastelemente 14, 17 bilden daher zusammen eine Rastvorrichtung. Diese Rastvorrichtung arretiert die Drehbewegung der Befestigungsvorrichtung 3 relativ zum Anschlussstück 5 in einer Mehrzahl von Drehstellungen mit einer vorbestimmten Verriegelungskraft. Durch die Wahl der Anzahl und Größe der Rastzähne bzw. der Rastnasen und/oder durch die Anpassung der Elastizität und Länge der elastischen Fortsätze 18 kann die Kraft, die benötigt wird, um das Anschlussstück 5 relativ zur Befestigungsvorrichtung 3 zu drehen - und damit die Länge der Zug-Druck-Stange 1 zu variieren - eingestellt werden.

In den Figuren nicht dargestellt ist ein Sicherungsring, der als mechanische Ausdrehsicherung am Schaft 10 angebracht ist. Hierzu kann der Schaft 10 an seinem dem Kupplungselement 8 abgewandten Ende ein in radialer Richtung herausragenden Sicherungsring aufweisen. Wird bei der Montage der Zug-Druck-Stange die Befestigungsvorrichtung 3 über ein bestimmtes Maß aus dem Anschlussstück 5 herausgedreht, so kontaktiert dieser Sicherungsring die Stirnfläche oder einen Absatz des Anschlussstückes 5. Auf diese Weise kann ein komplettes Herausdrehen der Befestigungsvorrichtung 3 verhindert werden.

### BEZUGSZEICHENLISTE

- 1: Zug-Druck-Stange
- 2: Befestigungsvorrichtung
- 3: Befestigungsvorrichtung
- 4: Anschlussstück
- 5: Anschlussstück
- 6: Mittelteil
- 7: Kupplungselement
- 8: Kupplungselement
- 9: Schaft
- 10: Schaft
- 11: Verbindungsbolzen
- 12: Ringelement
- 13: Fortsatz
- 14: erstes Rastelement
- 15: Schlitz
- 16: Hülsenelement
- 17: zweites Rastelement
- 18: elastischer Fortsatz
- 19: Schraube

## Patentansprüche

1. Zug-Druck-Stange (1), aufweisend:
- zumindest eine Befestigungsvorrichtung (3) mit einem Kupplungselement (8) und einem daran angeordneten Schaft (10),
- zumindest ein hülsenförmiges Anschlussstück (5), wobei die Befestigungsvorrichtung (3) zur Längenveränderung der Zug-Druck-Stange (1) über eine Gewindeanordnung drehbar mit dem Anschlussstück (5) verbunden ist, **gekennzeichnet durch**
- eine Rastvorrichtung mit in radialer Richtung gesehen jeweils einander zugewendeten sowie zusammenwirkenden ersten und zweiten Rastelementen (14, 17), die die Drehbewegung der Befestigungsvorrichtung (3) relativ zum Anschlussstück (5) in einer Mehrzahl von Drehstellungen mit einer vorbestimmten Verriegelungskraft lösbar arretieren,
wobei das erste Rastelement (14) auf einer innenliegenden Mantelfläche eines Ringelements (12) ausgebildet ist,
wobei das Ringelement (12) in axialer Richtung verschiebbar und in Umfangsrichtung drehfest mit dem Anschlussstück (5) verbunden ist, und
wobei das zweite Rastelement (17) drehfest am Schaft (10) der Befestigungsvorrichtung (3) angeordnet ist.

2. Zug-Druck-Stange (1) nach Anspruch 1, wobei das Ringelement (12) auf dessen äußeren Mantelfläche Fortsätze (13), die sich in axialer Richtung erstrecken, aufweist.

3. Zug-Druck-Stange (1) nach Anspruch 2, wobei das Anschlussstück (5) axial verlaufende Schlitze (15) oder Nute aufweist, in die die Fortsätze (13) des Ringelements (12) in axialer Richtung verschiebbar gelagert sind.

4. Zug-Druck-Stange (1) nach einem der vorhergehenden Ansprüche, wobei das erste Rastelement (14) als Rastzähne ausgebildet ist, die vollumfänglich auf der innenliegenden Mantelfläche des Ringelements (12) angeordnet sind.

5. Zug-Druck-Stange (1) nach einem der vorhergehenden Ansprüche, wobei das zweite Rastelement (17) auf einer äußeren Mantelfläche eines Hülsenelements (16) ausgebildet ist.

6. Zug-Druck-Stange (1) nach Anspruch 5, wobei das Hülsenelement (16) innenliegend im Ringelement (12) angeordnet ist.

7. Zug-Druck-Stange (1) nach einem der Ansprüche 5 oder 6, wobei das Hülsenelement (16) an einer Stirnseite des Schafts (10) fixiert ist.

8. Zug-Druck-Stange (1) nach einem der Ansprüche 5 bis 7, wobei das zweite Rastelement (17) auf einem elastischen Fortsatz (18) des Hülsenelements (16) ausgebildet ist.

9. Zug-Druck-Stange (1) nach einem der vorhergehenden Ansprüche, wobei das zweite Rastelement (17) aus zwei Rastnasen besteht.

10. Zug-Druck-Stange (1) nach einem der vorhergehenden Ansprüche, wobei am Schaft (10) ein Sicherungsring als mechanische Ausdrehsicherung angebracht ist.

11. Zug-Druck-Stange (1) nach Anspruch 1, wobei die Gewindeanordnung aus einem am Schaft (10) ausgebildeten Außengewinde und einem am Anschlussstück (5) ausgebildeten korrespondierenden Innengewinde besteht.

12. Zug-Druck-Stange (1) nach einem der vorhergehenden Ansprüche, wobei die Zug-Druck-Stange (1) an beiden axialen Enden eines Mittelteils (6) jeweils ein Befestigungsvorrichtung (2, 3) aufweist, wobei eine Befestigungsvorrichtung (3) über ein Rechtsgewinde mit dem Mittelteil (6) verbunden ist und die weitere Befestigungsvorrichtung (2) über ein Linksgewinde mit dem Mittelteil (6) verbunden ist.

## Claims

1. Push-pull rod (1) having:
- at least one fastening device (3), with a coupling element (8) and a stem (10) arranged thereon,
- at least one sleeve-like attachment piece (5), wherein the fastening device (3) is connected to the attachment piece (5) such that it can be rotated via a thread arrangement in order for the push-pull rod (1) to be changed in length,
**characterized by**
- a latching device with first and second latching elements (14, 17) which, as seen in the radial direction, are directed towards one another, and interact, and arrest the rotary movement of the fastening device (3) relative to the attachment piece (5) in a releasable manner, in a number of rotary positions, with a predetermined locking force,
wherein the first latching element (14) is formed on an inner lateral surface of an annular element (12),
wherein the annular element (12) is connected to the attachment piece (5) such that it can be displaced in the axial direction and is rotationally fixed in the circumferential direction, and
wherein the second latching element (17) is arranged in a rotationally fixed manner on the stem (10) of the fastening device (3).

2. Push-pull rod (1) according to Claim 1, wherein the annular element (12) has axially extending extensions (13) on its outer lateral surface.

3. Push-pull rod (1) according to Claim 2, wherein the attachment piece (5) has axially running slits (15) or grooves, in which the extensions (13) of the annular element (12) are mounted such that they can be displaced in the axial direction.

4. Push-pull rod (1) according to one of the preceding claims, wherein the first latching element (14) is designed in the form of latching teeth which are arranged over the entire circumference of the inner lateral surface of the annular element (12).

5. Push-pull rod (1) according to one of the preceding claims, wherein the second latching element (17) is formed on an outer lateral surface of a sleeve element (16).

6. Push-pull rod (1) according to Claim 5, wherein the sleeve element (16) is arranged inside the annular element (12).

7. Push-pull rod (1) according to either of Claims 5 and 6, wherein the sleeve element (16) is fixed on an end side of the stem (10).

8. Push-pull rod (1) according to one of Claims 5 to 7, wherein the second latching element (17) is formed on an elastic extension (18) of the sleeve element (16) .

9. Push-pull rod (1) according to one of the preceding claims, wherein the second latching element (17) comprises two latching noses.

10. Push-pull rod (1) according to one of the preceding claims, wherein a securing ring is fitted, in the form of a mechanical unscrewing-prevention means, on the stem (10).

11. Push-pull rod (1) according to Claim 1, wherein the thread arrangement comprises an external thread formed on the stem (10) and a corresponding internal thread formed on the attachment piece (5).

12. Push-pull rod (1) according to one of the preceding claims, wherein the push-pull rod (1) has a respective fastening device (2, 3) at each of the two axial ends of a central part (6), wherein one fastening device (3) is connected to the central part (6) via a right-hand thread and the other fastening device (2) is connected to the central part (6) via a left-hand thread.

## Revendications

1. Pince de traction-compression (1), présentant :
- au moins un dispositif de fixation (3) avec un élément d'accouplement (8) et une tige (10) disposé sur celui-ci,
- au moins une pièce de raccordement en forme de douille (5), le dispositif de fixation (3) étant connecté par le biais d'un agencement fileté de manière rotative à la pièce de raccordement (5) afin de prolonger la longueur de la pince de traction-compression (1),
**caractérisée par**
- un dispositif d'encliquetage ayant à chaque fois, vu dans la direction radiale, des premier et deuxième éléments d'encliquetage (14, 17) tournés l'un vers l'autre et coopérant l'un avec l'autre, qui bloquent de manière desserrable le mouvement de rotation du dispositif de fixation (3) par rapport à la pièce de raccordement (5) dans une pluralité de positions de rotation avec une force de verrouillage prédéterminée,
le premier élément d'encliquetage (14) étant réalisé sur une surface d'enveloppe intérieure d'un élément annulaire (12),
l'élément annulaire (12) pouvant être déplacé dans la direction axiale et étant connecté dans la direction périphérique de manière solidaire en rotation à la pièce de raccordement (5), et
le deuxième élément d'encliquetage (17) étant disposé de manière solidaire en rotation sur la tige (10) du dispositif de fixation (3).

2. Pince de traction-compression (1) selon la revendication 1, dans laquelle l'élément annulaire (12) présente, sur sa surface d'enveloppe extérieure, des saillies (13) qui s'étendent dans la direction axiale.

3. Pince de traction-compression (1) selon la revendication 2, dans laquelle la pièce de raccordement (5) présente des fentes (15) ou des rainures s'étendant axialement, dans lesquelles les saillies (13) de l'élément annulaire (12) sont supportées de manière déplaçable dans la direction axiale.

4. Pince de traction-compression (1) selon l'une quelconque des revendications précédentes, dans laquelle le premier élément d'encliquetage (14) est réalisé sous forme de dents d'encliquetage qui sont disposées sur toute la périphérie sur la surface d'enveloppe intérieure de l'élément annulaire (12).

5. Pince de traction-compression (1) selon l'une quelconque des revendications précédentes, dans laquelle le deuxième élément d'encliquetage (17) est réalisé sur une surface d'enveloppe extérieure d'un élément de douille (16).

6. Pince de traction-compression (1) selon la revendication 5, dans laquelle l'élément de douille (16) est disposé à l'intérieur dans l'élément annulaire (12).

7. Pince de traction-compression (1) selon l'une quelconque des revendications 5 ou 6, dans laquelle l'élément de douille (16) est fixé sur un côté frontal de la tige (10).

8. Pince de traction-compression (1) selon l'une quelconque des revendications 5 à 7, dans laquelle le deuxième élément d'encliquetage (17) est réalisé sur une saillie élastique (18) de l'élément de douille (16).

9. Pince de traction-compression (1) selon l'une quelconque des revendications précédentes, dans laquelle le deuxième élément d'encliquetage (17) se compose de deux ergots d'encliquetage.

10. Pince de traction-compression (1) selon l'une quelconque des revendications précédentes, dans laquelle une bague de fixation en tant que fixation contre le dévissage mécanique est montée sur la tige (10).

11. Pince de traction-compression (1) selon la revendication 1, dans laquelle l'agencement fileté se compose d'un filetage extérieur réalisé sur la tige (10) et d'un filetage intérieur correspondant réalisé sur la pièce de raccordement (5).

12. Pince de traction-compression (1) selon l'une quelconque des revendications précédentes, dans laquelle la pince de traction-compression (1) présente, au niveau des deux extrémités axiales d'une partie centrale (6), à chaque fois un dispositif de fixation (2, 3), un dispositif de fixation (3) étant connecté à la partie centrale (6) par le biais d'un filetage à droite et le dispositif de fixation supplémentaire (2) étant connecté à la partie centrale (6) par le biais d'un filetage à gauche.
